# EUROPEAN PATENT SPECIFICATION

(11) **EP 4 498 475 B1**
(45) Date of publication and mention of the grant of the patent: **23.09.2026**
(21) Application number: 23907478.4
(22) Date of filing: 28.11.2023
(51) Int. Cl.: H01M 10/42, A62C 3/16, A62C 99/00, A62C 35/68, A62C 37/36, H01M 50/20, H01M 10/613, H01M 10/48, H01M 10/6568, H01M 50/204, A62C 3/07, H01M 10/633

(54) **BATTERY PACK AND DEVICE INCLUDING SAME**
BATTERIEPACK UND VORRICHTUNG DAMIT
BLOC-BATTERIE ET DISPOSITIF LE COMPRENANT

(30) Priority: 22.12.2022 KR 20220181513; 27.11.2023 KR 20230166391
(43) Date of publication of application: 29.01.2025
(73) Proprietor: LG Energy Solution, Ltd., Seoul 07335 (KR)
(72) Inventor: LIM, Jaehwan, Daejeon 34122 (KR)
(74) Representative: Plasseraud IP
(86) International application number: PCT/KR2023/019333
(87) International publication number: WO 2024/136192

(56) References cited:
- CN-A- 111 509 163
- CN-A- 112 820 978
- CN-A- 113 117 274
- CN-A- 113 764 772
- CN-B- 112 002 958
- CN-U- 210 516 847
- CN-U- 213 546 433
- CN-U- 214 254 526
- CN-U- 214 254 526
- KR-A- 20220 063 050
- KR-A- 20220 100 459

## Description

### [TECHNICAL FIELD]

### Cross Citation with Related Application(s)

This application claims priority benefit of Korean Patent Application No. 10-2022-0181513 filed on December 22, 2022 and Korean Patent Application No. 10-2023-0166391 filed on November 27, 2023 in the Korean Intellectual Property Office.

The present disclosure relates to a battery pack and a device including the same, and more particularly, to a battery pack that prevents ignition and explosion when thermal runaway occurs in some battery modules, and a device including the same.

### (BACKGROUND]

Secondary batteries, which are easily applicable to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate byproducts from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch-type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

The battery pack is configured to have a structure in which a plurality of battery modules is combined. Therefore, in a case in which overvoltage, overcurrent, or overheating is applied to some of the battery modules, safety and operation efficiency of the battery pack may be problematic. Recently, the capacity of the battery pack tends to increase gradually in order to improve mileage, and as the energy inside the pack increases accordingly, it is necessary to design a structure that satisfies strengthened safety standards and secures the safety of the vehicle and driver.

In particular, in order to protect users and minimize damage to vehicles, there is a growing need to develop a battery pack that can completely block off ignition or explosion when thermal runaway occurs within the battery pack.
CN 111 509 163 discloses a battery pack including cooling water supply.
CN 112 820 978 discloses a battery pack including cooling water supply.
CN 113 764 772 discloses a battery pack including cooling water supply.

### [DETAILED DESCRIPTION OF THE INVENTION]

### [Technical Problem]

It is an object of the present disclosure to provide a battery pack that prevents ignition and explosion when thermal runaway occurs in some battery modules, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack according to claim 1.

The battery pack further comprises a first valve driving unit that drives and stops the first valve, wherein the first valve driving unit may stop the first valve and allow the cooling water to flow into the inlet pipe, and the first valve driving unit may drive the first valve and allow the cooling water to flow into the water pipe.

The filter unit may be a membrane filter formed of a porous membrane.

The filter unit is connected to a second outlet pipe that is branched from the water pipe and connected thereto, and a second valve may be located between the first outlet pipe and the second outlet pipe.

The second valve may discharge material that has moved from one of the first outlet pipe and the second outlet pipe.

The battery pack further comprises a second valve driving unit that drives and stops the second valve, wherein the second valve driving unit stops the second valve and discharges materials discharged from the outlet to the outside through the first outlet pipe, and the second valve driving unit drives the second valve and discharges materials moving into the second outlet pipe to the outside through the first outlet pipe.

The material discharged from the outlet is cooling water that has flowed into the inlet, and the material that have moved to the second outlet pipe may be the residual material that have separated from the filter unit among the cooling water flowing into the water pipe.

The battery pack may further comprise: a valve control unit that controls the first valve driving unit and the second valve driving unit, a BMS (Battery Management System) that measures the voltage and temperature of the battery cells included in the plurality of battery modules, and a control unit that controls the valve control unit and the BMS.

When the voltage of the battery cell measured by the BMS is 0.5V or less and the temperature of the battery cell is than 70 degrees Celsius or more, the control unit acquires thermal runaway abnormality confirmation information, and the valve control unit may control so that the first valve driving unit and the second valve driving unit drive the first valve and the second valve.

When the voltage of the battery cell measured by the BMS is more than 0.5V and the temperature of the battery cell is less than 70 degrees Celsius, the control unit acquires thermal runaway abnormality release information, and the valve control unit may control so that the first valve driving unit and the second valve driving unit stop the first valve and the second valve.

The battery pack comprises at least one spraying unit connected to the water port and located adjacent to the module part, and the spraying unit may spray water that has flowed into the water port toward the module part.

The battery pack further comprises a partition wall located between the module part and the electrical unit, wherein the at least one spraying unit may be located apart from each other on the partition wall.

The spraying unit may be located adjacent to a battery module that is located closest to the water port among the plurality of battery modules.

According to another embodiment of the present disclosure, there is provided a device comprising the above-mentioned battery pack.

### [Advantageous Effects]

According to the embodiments, the present disclosure relates to a battery pack and a device including the same. When thermal runaway occurs in some battery modules, the water sprayed through a water port can block off oxygen inside the battery pack to prevent ignition and explosion of the battery pack.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a perspective view showing a battery pack according to an embodiment of the present disclosure.
FIG. 2 is a diagram showing the upper surface frame of the battery pack of FIG. 1 under the state in which the upper pack frame thereof is removed.
FIG. 3 is a diagram showing a battery pack system that controls the battery pack of FIG. 1.
FIGS. 4 and 5 are flowcharts for confirming thermal runaway and suppressing thermal runaway of the battery pack of FIG. 1.
FIG. 6 is a diagram showing the upper surface frame of the battery pack according to a comparative example under the state in which the upper pack frame thereof is removed.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a battery pack according to one embodiment of the present disclosure will be described.

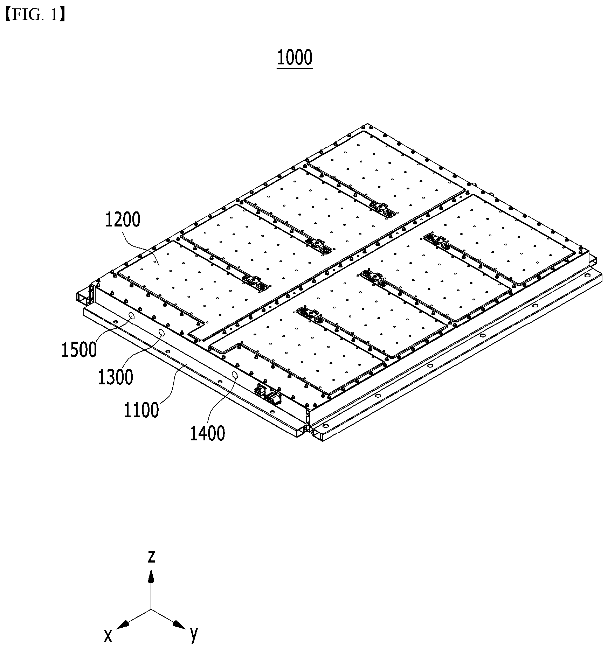

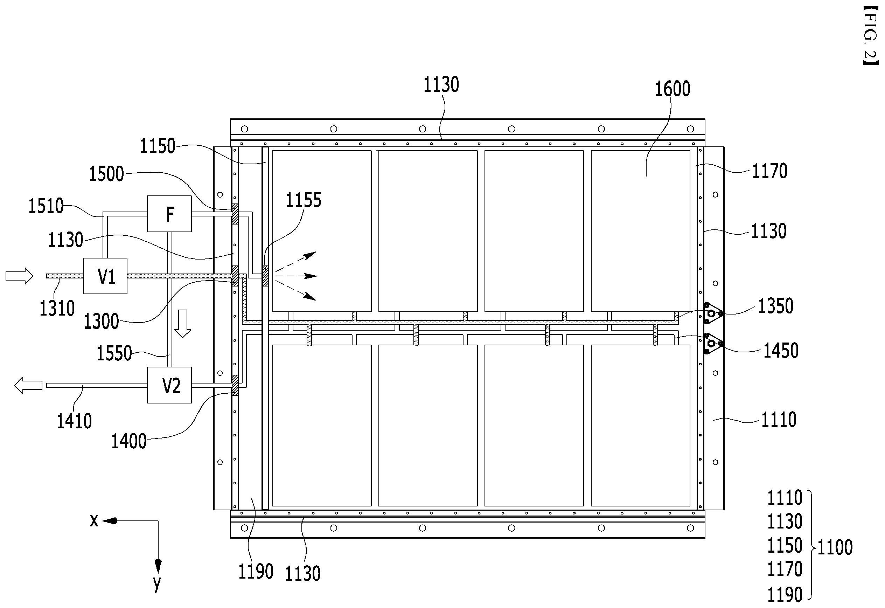

FIG. 1 is a perspective view showing a battery pack according to an embodiment of the present disclosure. FIG. 2 is a diagram showing the upper surface frame of the battery pack of FIG. 1 under the state in which the upper pack frame thereof is removed.

Referring to FIGS. 1 and 2, the battery pack 1000 according to an embodiment of the present disclosure comprises battery pack frames 1100 and 1200 that include a module part 1170 to which a plurality of battery modules 1600 are mounted and an electrical part 1190 to which electrical components are mounted; an inlet 1300 that supplies cooling water to the module part 1170; an outlet 1400 through which the cooling water supplied to the module part 1170 is discharged; and a water port 1500 that sprays water inside the module part 1170.

The battery pack frames 1100 and 1200 comprise a lower pack frame 1100 to which a plurality of battery modules 1600 are mounted and an upper pack frame 1200 located on an upper part of the battery module 1600. Herein, the lower pack frame 1100 and the upper pack frame 1200 can be coupled to each other by a method such as welding to seal the inside of the battery pack 1000. However, the shape of the battery pack frames 1100 and 1200 is not limited thereto, and any shape that can mount a plurality of battery modules 1600 can be included in the present embodiment.

The lower pack frame 1100 may comprise a bottom part 1110 in contact with the lower surface of the battery module 1600 and a side surface frame 1130 that houses a plurality of battery modules 1600. Herein, the bottom part 1110 and the side surface frame 1130 may be integrated with each other, or may be fixed to each other through a separate fastening method such as welding or adhesion.

In the lower pack frame 1100, at least one partition wall 1150 may be formed within the side surface frame 1130. In one example, as shown in FIG. 2, the lower pack frame 1100 may have a partition wall 1150 formed at a position that distinguishes the module part 1170 and the electrical part 1190. However, the present disclosure is not limited thereto, and the partition wall 1150 may be omitted, and may also be located between a pair of adjacent battery modules among the plurality of battery modules 1600 mounted on the module part 1170. Herein, the partition wall 1150 may be integrated with the bottom part 1110 and/or the side surface frame 1130, or may be fixed to each other by a separate fastening method such as welding or adhesion.

Further, the battery pack frames 1100 and 1200 may be made of an insulating member. In one example, the battery pack frames 1100 and 1200 may be composed of an aluminum extrusion structure. In another example, the battery pack frames 1100 and 1200 may be made of a dissimilar metal bonding material such as clad metal, or may be a structure containing an insulating material such as aerogel or EPP (Expanded Polypropylene) foam. However, the present disclosure is not limited thereto, and the battery pack frames 1100 and 1200 can be used without limitation as long as they are made of a heat-insulating material having a prescribed rigidity.

Although not specifically shown in FIGS. 1 and 2, in the battery pack 1000 according to this embodiment, a plurality of battery modules 1600 mounted on the module part 1170 may include a battery cell stack in which a plurality of battery cells are stacked, and a module frame that houses the battery cell stack. Herein, the battery cell is preferably a pouch type battery cell. In one example, the battery cell may be produced by housing the electrode assembly in a pouch case of a laminate sheet including a resin layer and an inner layer, and then heat-sealing a sealing part of the pouch case. Such battery cells may be configured by a plurality of numbers, and the plurality of battery cells are stacked so as to be electrically connected to each other, thereby forming a battery cell stack. Herein, the number of battery cells forming the battery cell stack may be adjusted according to circumstances.

The module frame may have a structure in which an upper cover covers a U-shaped frame. Specifically, the upper cover can be coupled to the U-shaped frame by welding or the like in a state in which the corner portions corresponding to each other are in contact with each other, to thereby form a structure that covers the top, bottom, left and right of the battery cell stack. In another example, the module frames may be replaced with a metal plate-shaped mono frame in which the upper and lower surfaces and both side surfaces integrated. In another example, the module frames may be replaced with a shape in which two L-shaped frames are coupled. In another example, the module frames may be replaced with a frame of a 4-plate structure in which an upper surface plate, a lower surface plate, a left plate, and a right plate are coupled. However, the present disclosure is not limited thereto, and any frame can be applied to the present embodiment as long as it can protect the internal components of the battery module 1600.

In addition, the battery module 1600 according to another embodiment of the present disclosure may have a structure in which the module frame is eliminated. That is, the battery pack 1000 according to the present embodiment may has a structure in which the module frame is eliminated among the components of the battery module 1600, thereby reducing the weight of the battery pack 1000 and also further increasing the space utilization rate inside the battery pack 1000.

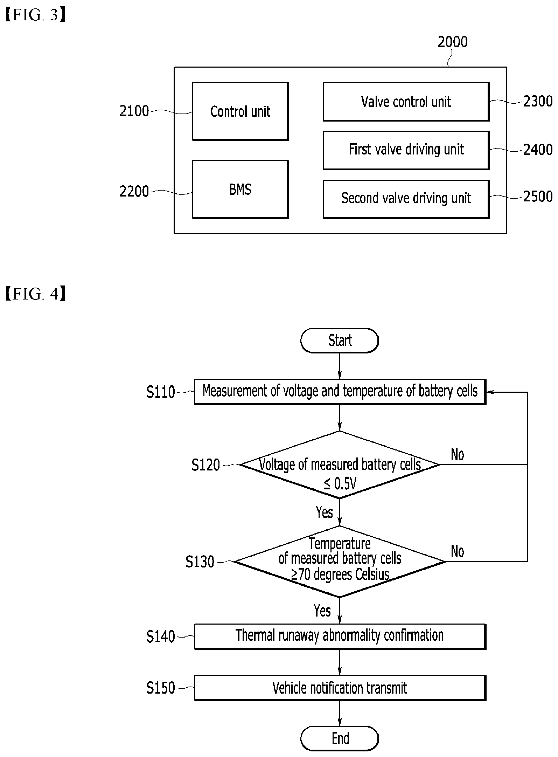

Although not specifically illustrated in FIGS. 1 and 2, in the battery pack 1000 according to the present embodiment, the electrical part 1190 may be equipped with at least a part of other electrical components and a control system 2000 such as a BMS 2200 (FIG. 3).

Referring to FIGS. 1 and 2, in the battery pack 1000 according to the present embodiment, the inlet 1300, the outlet 1400, and the water port 1500 may be located apart from each other at one side surface of the battery pack frames 1100 and 1200. In one example, as shown in FIG. 2, the inlet 1300, the outlet 1400 and the water port 1500 may be located apart from each other on one side surface of the lower pack frame 1100. However, the positions of the inlet 1300, the outlet 1400, and the water port 1500 are not limited to those illustrated in FIGS. 1 and 2, any position can be included in the present embodiment as long as it can a position that can appropriately perform supply and/or discharge of cooling water or water.

Referring to FIG. 2, the inlet 1300 is connected to the inlet pipe 1310 that supplies cooling water, the water port 1500 is connected to a water pipe 1510 branched from the inlet pipe 1310, and the outlet 1400 may be connected to a first outlet pipe 1410 that discharges the cooling water to the outside. In one example, the inlet 1300 and the inlet pipe 1310, the water port 1500 and the water pipe 1510, and the outlet 1400 and the first outlet pipe 1410 may each be fixed to each other using separate fastening methods such as welding or adhesion.

Herein, the inlet 1300 may supply cooling water to the module part 1170, and the outlet 1400 may discharge cooling water supplied to the module part 1170. In one example, as shown in FIG. 2, the cooling water supplied to the inlet 1300 may move to cooling flow passages 1350 that are respectively connected to heat sinks (not shown) that cool the plurality of battery modules 1600 mounted on the module part 1170. Further, the cooling water flowing into the cooling flow passages 1350 may pass through the inside of the heat sink (not shown) and then move to the discharge flow passage 1450, and the cooling water that has moved to the discharge flow passage 1450 may be discharged to the outside through the outlet 1400. At this time, although not illustrated in FIG. 2, the heat sink may be located inside the plurality of battery modules 1600 or may be located on the lower surface of the plurality of battery modules 1600.

According to the invention, a first valve V1 is located between the inlet pipe 1310 and the water pipe 1510. Herein, the first valve V1 allows the cooling water to flow into one of the inlet pipe 1310 and the water pipe 1510. In one example, when the first valve V1 does not operate, the cooling water flowing into the inlet pipe 1310 may move to the inlet 1300. Conversely, when the first valve V1 operates, the cooling water flowing into the inlet pipe 1310 may flow into the water pipe 1510 and move to the water port 1500.

Further, the battery pack 1000 according to the present embodiment may include a first valve driving unit 2400 (FIG. 3) that drives and stops the first valve V1. Herein, the first valve driving unit 2400 (FIG. 3) can stop the first valve V1 and allow the cooling water to flow into the inlet pipe 1310. Herein, stopping the first valve V1 means that the first valve V1 is not operated or driven. Further, the first valve driving unit 2400 (FIG. 3) may drive the first valve V1 and allow the cooling water to flow into the water pipe 1510.

Thereby, in the battery pack 1000 according to the present embodiment, a first valve V1 is located between the inlet pipe 1310 and the water pipe 1510, so that the flow of cooling water flowing into the inlet pipe 1310 can be easily changed depending on the internal situation of the battery pack 1000.

Referring to FIGS. 1 and 2, the water pipe 1510 has a filter unit F formed between the water port 1500 and the first valve V1. Herein, the filter unit F can separate materials contained in the cooling water flowing into the water pipe 1510 from each other. More specifically, the filter unit F separates water and residual materials in the cooling water flowing into the water pipe 1510, and only the water separated in the filter unit F can flow into the water port 1500.

In one example, the cooling water may include water and residual materials. In particular, the cooling water is usually made of antifreeze to prevent it from freezing even at low temperatures, and is usually a mixture of water and ethylene glycol in a ratio of 1:1. In other cases, the cooling water may be mostly a mixture of water and some organic solvents.

In one example, the residual materials may include materials such as ethylene glycol and/or diethylene glycol. Further, the residual materials may include cooling water additives such as phosphates, silicates, and the like. However, the residual materials are not limited thereto, and any material can be included in the present embodiment as long as it is a material necessary to cool the battery module 1600.

In one example, the filter unit F may be a membrane filter formed of a porous membrane. Herein, similar to the pervaporation method, the filter unit F may be a membrane filter that can separate the cooling water into water and residual materials by partial evaporation through a porous membrane. However, the present disclosure is not limited thereto, and any filter can be included in this embodiment as long as it is a filter that can separate the cooling water into water and residual materials.

Therefore, in the battery pack 1000 according to the present embodiment, when thermal runaway occurs inside the battery pack 1000, oxygen inside the module part 1170 can be blocked off through the water supplied to the water port 1500, thereby preventing additional ignition and/or explosion that may occur inside the battery pack 1000.

Unlike the same, when residual materials excluding water from the cooling water are sprayed into the module part 1170 and the inside of the battery pack 1000 or the battery module 100 is water-infiltrated, the residual materials contained in the cooling water may cause high-voltage insulation breakdown of components contained within the battery pack 1000. Further, due to high-voltage insulation breakdown induced by components included inside the battery pack 1000, there is a problem that ignition may occur inside the battery pack 1000 and a fire may occur inside the battery pack 1000.

Thereby, in the battery pack 1000 according to the present embodiment, only the water contained in the cooling water flowing into the water pipe 1510 through the filter unit F included in the water pipe 1510 can be flowed into the battery pack 1000, so that insulation breakdown induced by the residual materials contained in the cooling water can be prevented.

Referring to FIGS. 1 and 2, the filter unit F may be connected to a second outlet pipe 1550 that is branched from the water pipe 1510 and connected thereto. Further, a second valve V2 may be located between the first outlet pipe 1410 and the second outlet pipe 1550. Herein, the second valve V2 may discharge materials moved from one of the first outlet pipe 1410 and the second outlet pipe 1550. In one example, if the second valve V2 is not operated, the materials discharged to the outlet 1400 may be discharged to the outside through the first outlet pipe 1410. Conversely, when the second valve V2 is operated, materials that have moved to the second outlet pipe 1550 may be discharged to the outside through the first outlet pipe 1410. Herein, the material discharged from the outlet 1400 is the cooling water flowing into the inlet 1300, and the material moved to the second outlet pipe 1550 may be the residual materials separated from the filter unit F among the cooling water flowing into the water pipe 1510.

Further, the battery pack 1000 according to the present embodiment may include a second valve driving unit 2500 (FIG. 3) that drives and stops the second valve V2. Herein, the second valve driving unit 2500 (FIG. 3) may stop the second valve V2 and allow the cooling water discharged from the outlet 1400 to be discharged to the outside through the first outlet pipe 1410. Herein, stopping the second valve V2 means that the second valve V2 is not operated or driven. Further, the second valve driving unit 2500 (FIG. 3) drives the second valve V2, so that the residual material separated from the filter unit F moving through the outlet pipe 1550 can be discharged to the outside through the first outlet pipe 1410.

Thereby, in the battery pack 1000 according to the present embodiment, the second valve V2 is located between the filter unit F and the first outlet pipe 1410, so that the type of materials discharged to the outside through the first outlet pipe 1410 can be easily changed depending on the internal situation of the battery pack 1000.

Referring to FIGS. 2 and 3, the battery pack 1000 according to the present embodiment is connected to the water port 1500, and may include at least one spraying unit 1155 located adjacent to the module part 1170. More specifically, the spraying unit 1155 may spray water flowing into the water port 1500 toward the module part 1170. Herein, the spraying unit 1155 may adjust the spraying speed and/or amount of water based on the shape and number of battery modules 1600 mounted inside the module part 1170.

In one example, the spraying unit 1155 may be made of an insulating and/or flame-retardant material. In another example, the spraying unit 1155 may be made of a material such as aluminum depending on other designs. However, the present disclosure is not limited thereto, and any material can be included in the present embodiment as long as it is a material that can spray water toward the module part 1170 without being damaged when thermal runaway of the battery pack 1000 occurs.

Further, in the battery pack 1000 according to the present embodiment, at least one spraying unit 1155 may be located apart from each other on the partition wall 1150. In one example, the spraying unit 1155 may be located at the 2/3 point of the partition wall 1150.

In another example, in the case of the battery pack 1000 in which the partition wall 1150 is omitted, the spraying unit 1155 may be located adjacent to the battery module located closest to the water port 1500 among the plurality of battery modules 1600. Herein, the number and position of the spraying unit 1155 are not limited to those shown in FIG. 2, and the number and position of the battery modules 1600 may be adjusted based on the shape, number and the like of the battery modules 1600.

Thereby, in the battery pack 1000 according to the present embodiment, only water among the cooling water can be directly sprayed onto the module part 1170 via the spray unit 1155, whereby while preventing insulation breakdown due to the residual materials contained in the cooling water, oxygen inside the module portion 1170 can be effectively blocked off when thermal runaway occurs inside the battery pack 1000. In addition, the battery pack 1000 according to the present embodiment can effectively prevent additional ignition and/or explosion that may occur inside the battery pack 1000.

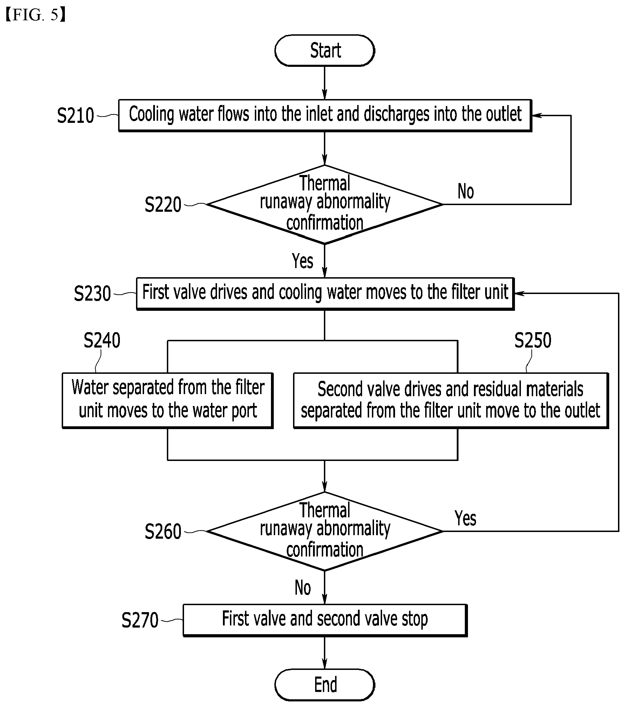

FIG. 3 is a diagram showing a battery pack system that controls the battery pack of FIG. 1. FIGS. 4 and 5 are flowcharts for confirming thermal runaway and suppressing thermal runaway of the battery pack of FIG. 1.

Referring to FIG. 3, the battery pack 1000 according to the present embodiment can be controlled by a battery pack system 2000 that includes a control unit 2100, a BMS(battery management system) 2200, a valve control unit 2300, a first valve driving unit 2400, and a second valve driving unit 2500.

More specifically, the control unit 2100 may control a BMS (battery management system) 2200 and a valve control unit 2300. The control unit 2100 may include at least one of a CPU (central processing unit), a RAM (random access memory), a GPU (graphic processing unit), one or more microprocessors, and other electronic components that can process input data according to predetermined logic. In one example, the control unit 2100 develops a thermal runaway confirmation process and a thermal runaway prevention process that can be performed by the battery pack system 2000 on RAM, and can perform various processes, such as controlling the BMS (Battery Management System) 2200 and the valve control unit 2300 according to the developed program.

BMS(battery management system) 2200 can measure the voltage and temperature of battery cells included in a plurality of battery modules 1600. More specifically, the BMS 2200 can estimate the state of the battery cell mounted inside the battery module 1600 and manage the battery pack 1000 using the estimated state information. In one example, the BMS 2200 can measure and manage the voltage and temperature of the battery cell as the status of the battery cell. In the present embodiment, the BMS 2200 may provide status information about the measured voltage and temperature of the battery cell to the control unit 2100.

Referring to FIGS. 2 to 4, as a process for confirming thermal runaway of the battery pack 1000 of the present embodiment, the BMS 2200 may measure the voltage and temperature of the battery cell (S110). At this time, it is possible to confirm whether the measured voltage of the battery cell is 0.5V or less (S120). Herein, the measured voltage of the battery cell may mean the highest voltage among the voltages measured in a plurality of battery cells (not shown) included in the plurality of battery modules 1600. If the measured voltage of the battery cell is less than 0.5V, it is possible to confirm whether the temperature of the battery cell is 70 degrees Celsius or more (S130). If the temperature of the battery cell is 70 degrees Celsius or more, the control unit 2100 may acquire thermal runaway abnormality confirmation information indicating that thermal runaway abnormality has occurred inside the battery pack 1000 based on information provided by the BMS 2200. After that, the control unit 2100 may transmit a notification to the vehicle to which the battery pack 1000 is mounted based on the thermal runaway abnormality confirmation information (S150).

Unlike the same, if the measured voltage of the battery cell is more than 0.5V or the temperature of the battery cell is less than 70 degrees Celsius, the BMS 2200 can continuously measure and manage the voltage and temperature of the battery cell.

Referring to FIGS. 2 and 3, the valve control unit 2300 may control the first valve driving unit 2400 and the second valve driving unit 2500. More specifically, the valve control unit 2300 can control the first valve driving unit 2400 to drive or stop the first valve V1, and the valve control unit 2300 may control the second valve driving unit 2500 to drive or stop the second valve V2.

Referring to FIGS. 2, 3, and 5, as a thermal runaway prevention process of the battery pack 1000 of the present embodiment, when the control unit 2100 does not acquire thermal runaway abnormality confirmation information, the cooling water may flow into the inlet 1300, and the inflowed coolant may be discharged into the outlet 1400 (S210). After that, when thermal runaway abnormality occurs within the battery pack 1000, the control unit 2100 may acquire thermal runaway abnormality confirmation information based on the thermal runaway confirmation process (S220). At this time, the valve control unit 2300 may control the first valve driving unit 2400 to drive the first valve V1, and the cooling water may move to the filter unit F via the water pipe 1510 (S230). Here, the cooling water that has moved to the filter unit F is separated into water and the residual material, and the water separated from the filter unit F can move to the water port 1500 (S240). Further, the valve control unit 2300 can control the second valve driving unit 2500 and allow the residual material separated from the filter unit F to move to the outlet pipes 1410 and 1550 (S250). After that, the control unit 2100 can confirm again whether thermal runaway is abnormal (S260). At this time, if the control unit 2100 does not confirm the thermal runaway abnormality, in other words, if thermal runaway abnormality release information is acquired, the valve control unit 2300 may stop the first valve V1 and the second valve V2 via the first valve driving unit 2400 and the second valve driving unit 2500 (S270).

Thereby, the battery pack 1000 according to the present embodiment can block off oxygen inside the module part 1170 through water supplied to the water port 1500, and can prevent additional ignition and/or explosion that can occur within the battery pack 1000.

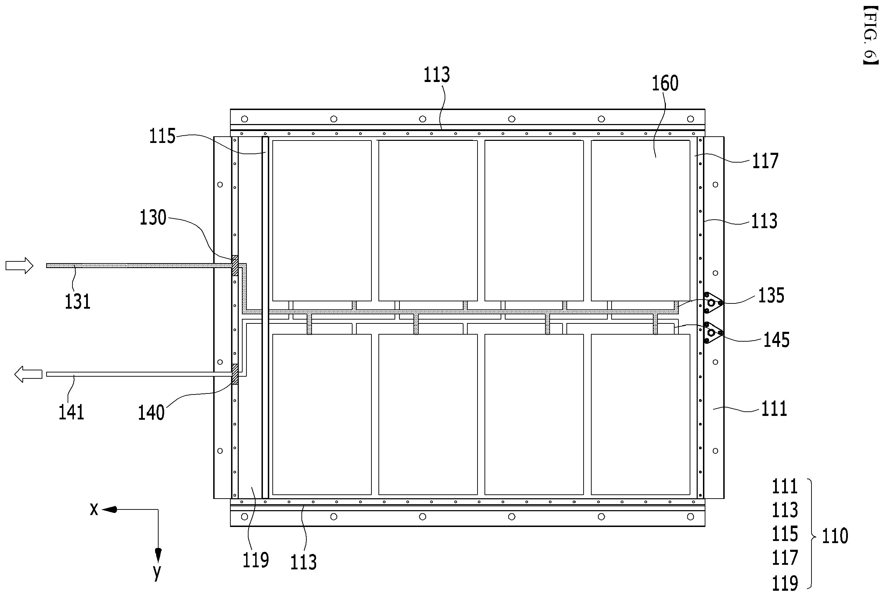

FIG. 6 is a diagram showing the upper surface frame of the battery pack according to a comparative example under the state in which the upper pack frame thereof is removed.

Referring to FIG. 6, unlike the battery pack 1000 (FIGS. 1 to 5) according to the present embodiment, the battery pack according to the comparative example has a structure that does not include the first valve V1, the second valve V2, the filter part F, and the water port 1500, but includes all the other components in the same manner.

Referring to FIG. 6, in the case of the battery pack according to the comparative example, no separate components are included to completely prevent ignition and/or explosion of the battery pack when thermal runaway occurs inside the battery pack. Thereby, in the case of the battery pack according to the comparative example, if thermal runaway occurs inside the battery pack, only a delay of several minutes to several tens of minutes is possible, thus making it impossible to prevent additional ignition and/or explosion, and it may be difficult to minimize damage to lives or vehicles without external intervention.

In contrast, referring to FIGS. 1 to 5, the battery pack 1000 according to the present embodiment utilizes the coolant flowing into and being discharged from the module part 1170, so that water can be directly sprayed on the module part 1170 via the water port 1500. Therefore, even if thermal runaway occurs inside the battery pack 1000, there is an advantage in that additional ignition and/or explosion can be completely blocked off.

According to yet another embodiment of the present disclosure, there can be provided a device comprising the above-mentioned battery pack. Such a device can be applied to vehicle means such as an electric bike, an electric vehicle, and a hybrid electric vehicle, but the present disclosure is not limited thereto, and is applicable to various devices that can use a battery module and a battery pack including the same, which also falls under the scope of the present disclosure.

Although the invention has been described in detail with reference to preferred embodiments of the present disclosure, the scope of the present disclosure is not limited thereto, and various modifications and improvements can be made within the scope defined by the appended claims.

### [Description of Reference Numerals]

1000: battery pack
1100: lower pack frame
1200: upper pack frame
1300: inlet
1310: inlet pipe
1400: outlet
1410: first outlet pipe
1450: second outlet pipe
1500: water port
1510: water pipe
1600: battery module
2000: battery pack system
2100: control unit
2200: BMS
2300: valve control unit
2400: first valve driving unit
2500: second valve driving unit
V1: first valve
V2: second valve
F: filter unit

## Claims

1. A battery pack comprising:
a battery pack frame (1100, 1200) that includes a module part (1170) to which a plurality of battery modules (1600) are mounted and an electrical part (1190) to which electrical components are mounted;
an inlet (1300) that supplies cooling water to the module part (1170);
an outlet (1400) through which the cooling water supplied to the module part (1170) is discharged; and
a water port (1500) that sprays water inside the module part (1170),
wherein the inlet (1300), the outlet (1400), and the water port (1500) are located apart from each other at one side surface of the battery pack frame (1100, 1200),
wherein:
the inlet (1300) is connected to an inlet pipe (1310) that supplies the cooling water,
the water port (1500) is connected to a water pipe (1510) branched from the inlet pipe (1310), and
the outlet (1400) is connected to a first outlet pipe (1410) that discharges the cooling water to the outside,
wherein:
a first valve (V1) is located between the inlet pipe (1310) and the water pipe (1510), and
the first valve (V1) allows the cooling water to flow into one of the inlet pipe (1310) and the water pipe (1510),
**characterized in that**:
the water pipe (1510) is formed with a filter unit (F) between the water port (1500) and the first valve (V1),
the filter unit (F) separates water and residual materials among the cooling water flowing into the water pipe (1510), and
the water separated from the filter unit (F) flows into the water port (1500).

2. The battery pack of claim 1,
further comprising a first valve driving unit (2400) that drives and stops the first valve (V1), wherein:
the first valve driving unit (2400) stops the first valve (V1) and allows the cooling water to flow into the inlet pipe (1310), and
the first valve driving unit (2400) drives the first valve (V1) and allows the cooling water to flow into the water pipe (1510).

3. The battery pack of claim 1, wherein:
the filter unit (F) is a membrane filter formed of a porous membrane.

4. The battery pack of claim 1, wherein:
the filter unit (F) is connected to a second outlet pipe (1450) that is branched from the water pipe (1510) and connected thereto,
a second valve (V2) is located between the first outlet pipe (1410) and the second outlet pipe (1450), and
the second valve (V2) discharges material that has moved from one of the first outlet pipe (1410) and the second outlet pipe (1450).

5. The battery pack of claim 4,
further comprising a second valve driving unit (2500) that drives and stops the second valve (V2), wherein:
the second valve driving unit (2500) stops the second valve (V2) and discharges materials discharged from the outlet (1400) to the outside through the first outlet pipe (1410), and
the second valve driving unit (2500) drives the second valve (V2) and discharges materials moving into the second outlet pipe (1450) to the outside through the first outlet pipe (1410).

6. The battery pack of claim 5, wherein:
the material discharged from the outlet (1400) is cooling water that has flowed into the inlet (1300), and
the material that have moved to the second outlet pipe (1450) is the residual material that have separated from the filter unit (F) among the cooling water flowing into the water pipe (1510).

7. The battery pack of claim 5,
further comprising a valve control unit (2300) that controls the first valve driving unit (2400) and the second valve driving unit (2500),
a BMS (Battery Management System 2200) that measures the voltage and temperature of the battery cells included in the plurality of battery modules (1600), and
a control unit (2100) that controls the valve control unit (2300) and the BMS (2200).

8. The battery pack of claim 7, wherein:
when the voltage of the battery cell measured by the BMS (2100) is 0.5V or less and the temperature of the battery cell is than 70 degrees Celsius or more,
the control unit (2100) acquires thermal runaway abnormality confirmation information, and
the valve control unit (2100) controls so that the first valve driving unit (2400) and the second valve driving unit (2500) drive the first valve (V1) and the second valve (V2).

9. The battery pack of claim 7, wherein:
when the voltage of the battery cell measured by the BMS (2100) is more than 0.5V and the temperature of the battery cell is less than 70 degrees Celsius,
the control unit (2100) acquires thermal runaway abnormality release information, and
the valve control unit (2300) controls so that the first valve driving unit (2400) and the second valve driving unit (2500) stop the first valve (V1) and the second valve (V2).

10. The battery pack of claim 8, wherein:
the battery pack (1000) comprises at least one spraying unit connected to the water port (1500) and located adjacent to the module part (1170), and
the spraying unit sprays water that has flowed into the water port (1500) toward the module part (1170).

11. The battery pack of claim 10,
further comprising a partition wall (1150) located between the module part (1170) and the electrical unit,
wherein the at least one spraying unit is located apart from each other on the partition wall (1150).

12. The battery pack of claim 10, wherein:
the spraying unit (1155) is located adjacent to a battery module (1600) that is located closest to the water port (1500) among the plurality of battery modules (1600).

## Patentansprüche

1. Batteriepack, umfassend:
einen Batteriepackrahmen (1100, 1200), der einen Modulteil (1170), an dem eine Vielzahl von Batteriemodulen (1600) montiert sind, und einen elektrischen Teil (1190), an dem elektrische Komponenten montiert sind, enthält;
einen Einlass (1300), der dem Modulteil (1170) Kühlwasser zuführt;
einen Auslass (1400), durch den das dem Modulteil (1170) zugeführte Kühlwasser abgelassen wird; und
einen Wasseranschluss (1500), der Wasser in den Modulteil (1170) sprüht,
wobei der Einlass (1300), der Auslass (1400) und der Wasseranschluss (1500) voneinander beabstandet an einer Seitenfläche des Batteriepackrahmens (1100, 1200) angeordnet sind,
wobei:
der Einlass (1300) mit einem Einlassrohr (1310) verbunden ist, das das Kühlwasser zuführt,
der Wasseranschluss (1500) mit einem Wasserrohr (1510) verbunden ist, das von dem Einlassrohr (1310) abgezweigt ist, und
der Auslass (1400) mit einem ersten Auslassrohr (1410) verbunden ist, das das Kühlwasser nach außen ablässt,
wobei:
ein erstes Ventil (V1) zwischen dem Einlassrohr (1310) und dem Wasserrohr (1510) angeordnet ist, und
das erste Ventil (V1) dem Kühlwasser ermöglicht, in eines von dem Einlassrohr (1310) und dem Wasserrohr (1510) zu fließen,
**dadurch gekennzeichnet, dass**:
das Wasserrohr (1510) mit einer Filtereinheit (F) zwischen dem Wasseranschluss (1500) und dem ersten Ventil (V1) ausgebildet ist,
die Filtereinheit (F) Wasser und Reststoffe aus dem in das Wasserrohr (1510) fließenden Kühlwasser trennt, und
das von der Filtereinheit (F) getrennte Wasser in den Wasseranschluss (1500) fließt.

2. Batteriepack nach Anspruch 1, ferner umfassend eine erste Ventilantriebseinheit (2400), die das erste Ventil (V1) antreibt und stoppt, wobei:
die erste Ventilantriebseinheit (2400) das erste Ventil (V1) stoppt und dem Kühlwasser ermöglicht, in das Einlassrohr (1310) zu fließen, und
die erste Ventilantriebseinheit (2400) das erste Ventil (V1) antreibt und dem Kühlwasser ermöglicht, in das Wasserrohr (1510) zu fließen.

3. Batteriepack nach Anspruch 1, wobei:
die Filtereinheit (F) ein Membranfilter ist, der aus einer porösen Membran gebildet ist.

4. Batteriepack nach Anspruch 1, wobei:
die Filtereinheit (F) mit einem zweiten Auslassrohr (1450) verbunden ist, das von dem Wasserrohr (1510) abgezweigt und damit verbunden ist,
ein zweites Ventil (V2) zwischen dem ersten Auslassrohr (1410) und dem zweiten Auslassrohr (1450) angeordnet ist, und
das zweite Ventil (V2) Material ablässt, das sich von einem von dem ersten Auslassrohr (1410) und dem zweiten Auslassrohr (1450) bewegt hat.

5. Batteriepack nach Anspruch 4, ferner umfassend eine zweite Ventilantriebseinheit (2500), die das zweite Ventil (V2) antreibt und stoppt, wobei:
die zweite Ventilantriebseinheit (2500) das zweite Ventil (V2) stoppt und Materialien, die aus dem Auslass (1400) abgelassen werden, durch das erste Auslassrohr (1410) nach außen ablässt, und
die zweite Ventilantriebseinheit (2500) das zweite Ventil (V2) antreibt und Materialien, die sich in das zweite Auslassrohr (1450) bewegen, durch das erste Auslassrohr (1410) nach außen ablässt.

6. Batteriepack nach Anspruch 5, wobei:
das aus dem Auslass (1400) abgelassene Material Kühlwasser ist, das in den Einlass (1300) geflossen ist, und
das Material, das sich zu dem zweiten Auslassrohr (1450) bewegt hat, der Reststoff ist, der sich von der Filtereinheit (F) aus dem in das Wasserrohr (1510) fließenden Kühlwasser getrennt hat.

7. Batteriepack nach Anspruch 5, ferner umfassend eine Ventilsteuereinheit (2300), die die erste Ventilantriebseinheit (2400) und die zweite Ventilantriebseinheit (2500) steuert,
ein BMS (Batteriemanagementsystem 2200), das die Spannung und Temperatur der in der Vielzahl von Batteriemodulen (1600) enthaltenen Batteriezellen misst, und
eine Steuereinheit (2100), die die Ventilsteuereinheit (2300) und das BMS (2200) steuert.

8. Batteriepack nach Anspruch 7, wobei:
wenn die von dem BMS (2200) gemessene Spannung der Batteriezelle 0,5 V oder weniger beträgt und die Temperatur der Batteriezelle 70 Grad Celsius oder mehr beträgt, die Steuereinheit (2100) Bestätigungsinformationen über eine thermische Durchgehanomalie erfasst, und
die Ventilsteuereinheit (2100) so steuert, dass die erste Ventilantriebseinheit (2400) und die zweite Ventilantriebseinheit (2500) das erste Ventil (V1) und das zweite Ventil (V2) antreiben.

9. Batteriepack nach Anspruch 7, wobei:
wenn die von dem BMS (2200) gemessene Spannung der Batteriezelle mehr als 0,5 V beträgt und die Temperatur der Batteriezelle weniger als 70 Grad Celsius beträgt,
die Steuereinheit (2100) Freigabeinformationen über eine thermische Durchgehanomalie erfasst, und
die Ventilsteuereinheit (2300) so steuert, dass die erste Ventilantriebseinheit (2400) und die zweite Ventilantriebseinheit (2500) das erste Ventil (V1) und das zweite Ventil (V2) stoppen.

10. Batteriepack nach Anspruch 8, wobei:
das Batteriepack (1000) mindestens eine Sprüheinheit umfasst, die mit dem Wasseranschluss (1500) verbunden und benachbart zum Modulteil (1170) angeordnet ist, und
die Sprüheinheit Wasser, das in den Wasseranschluss (1500) geflossen ist, in Richtung des Modulteils (1170) sprüht.

11. Batteriepack nach Anspruch 10, ferner umfassend eine Trennwand (1150), die zwischen dem Modulteil (1170) und der elektrischen Einheit angeordnet ist, wobei die mindestens eine Sprüheinheit voneinander beabstandet an der Trennwand (1150) angeordnet ist.

12. Batteriepack nach Anspruch 10, wobei:
die Sprüheinheit (1155) benachbart zu einem Batteriemodul (1600) angeordnet ist, das unter der Vielzahl von Batteriemodulen (1600) dem Wasseranschluss (1500) am nächsten angeordnet ist.

## Revendications

1. Bloc-batterie comprenant :
un châssis de bloc-batterie (1100, 1200) qui inclut une partie module (1170) sur laquelle une pluralité de modules de batterie (1600) sont montés et une partie électrique (1190) sur laquelle des composants électriques sont montés ;
une entrée (1300) qui fournit de l'eau de refroidissement à la partie module (1170) ;
une sortie (1400) à travers laquelle l'eau de refroidissement fournie à la partie module (1170) est évacuée ; et
un orifice d'eau (1500) qui pulvérise de l'eau à l'intérieur de la partie module (1170),
dans lequel l'entrée (1300), la sortie (1400) et l'orifice d'eau (1500) sont situés à distance les uns des autres sur une surface latérale du châssis de bloc-batterie (1100, 1200),
dans lequel :
l'entrée (1300) est connectée à un tuyau d'entrée (1310) qui fournit l'eau de refroidissement,
l'orifice d'eau (1500) est connecté à un tuyau d'eau (1510) ramifié depuis le tuyau d'entrée (1310), et
la sortie (1400) est connectée à un premier tuyau de sortie (1410) qui évacue l'eau de refroidissement vers l'extérieur,
dans lequel :
une première vanne (V1) est située entre le tuyau d'entrée (1310) et le tuyau d'eau (1510), et
la première vanne (V1) permet à l'eau de refroidissement de s'écouler dans l'un parmi le tuyau d'entrée (1310) et le tuyau d'eau (1510),
**caractérisé en ce que** :
le tuyau d'eau (1510) est formé avec une unité de filtration (F) entre l'orifice d'eau (1500) et la première vanne (V1),
l'unité de filtration (F) sépare l'eau et les matières résiduelles parmi l'eau de refroidissement s'écoulant dans le tuyau d'eau (1510), et
l'eau séparée de l'unité de filtration (F) s'écoule dans l'orifice d'eau (1500).

2. Le bloc-batterie selon la revendication 1, comprenant en outre une première unité de commande de vanne (2400) qui actionne et arrête la première vanne (V1), dans lequel :
la première unité de commande de vanne (2400) arrête la première vanne (V1) et permet à l'eau de refroidissement de s'écouler dans le tuyau d'entrée (1310), et
la première unité de commande de vanne (2400) actionne la première vanne (V1) et permet à l'eau de refroidissement de s'écouler dans le tuyau d'eau (1510).

3. Le bloc-batterie selon la revendication 1, dans lequel :
l'unité de filtration (F) est un filtre à membrane formé d'une membrane poreuse.

4. Le bloc-batterie selon la revendication 1, dans lequel :
l'unité de filtration (F) est connectée à un deuxième tuyau de sortie (1450) qui est ramifié depuis le tuyau d'eau (1510) et connecté à celui-ci,
une deuxième vanne (V2) est située entre le premier tuyau de sortie (1410) et le deuxième tuyau de sortie (1450), et
la deuxième vanne (V2) évacue la matière qui s'est déplacée depuis l'un parmi le premier tuyau de sortie (1410) et le deuxième tuyau de sortie (1450).

5. Le bloc-batterie selon la revendication 4, comprenant en outre une deuxième unité de commande de vanne (2500) qui actionne et arrête la deuxième vanne (V2), dans lequel :
la deuxième unité de commande de vanne (2500) arrête la deuxième vanne (V2) et évacue les matières évacuées de la sortie (1400) vers l'extérieur à travers le premier tuyau de sortie (1410), et
la deuxième unité de commande de vanne (2500) actionne la deuxième vanne (V2) et évacue les matières se déplaçant dans le deuxième tuyau de sortie (1450) vers l'extérieur à travers le premier tuyau de sortie (1410).

6. Le bloc-batterie selon la revendication 5, dans lequel :
la matière évacuée de la sortie (1400) est de l'eau de refroidissement qui s'est écoulée dans l'entrée (1300), et
la matière qui s'est déplacée vers le deuxième tuyau de sortie (1450) est la matière résiduelle qui s'est séparée de l'unité de filtration (F) parmi l'eau de refroidissement s'écoulant dans le tuyau d'eau (1510).

7. Le bloc-batterie selon la revendication 5, comprenant en outre une unité de commande de vanne (2300) qui commande la première unité de commande de vanne (2400) et la deuxième unité de commande de vanne (2500),
un BMS (système de gestion de batterie 2200) qui mesure la tension et la température des cellules de batterie incluses dans la pluralité de modules de batterie (1600), et
une unité de commande (2100) qui commande l'unité de commande de vanne (2300) et le BMS (2200).

8. Le bloc-batterie selon la revendication 7, dans lequel :
lorsque la tension de la cellule de batterie mesurée par le BMS (2200) est de 0,5 V ou moins et que la température de la cellule de batterie est de 70 degrés Celsius ou plus,
l'unité de commande (2100) acquiert une information de confirmation d'anomalie d'emballement thermique, et
l'unité de commande (2100) commande de sorte que la première unité de commande de vanne (2400) et la deuxième unité de commande de vanne (2500) actionnent la première vanne (V1) et la deuxième vanne (V2).

9. Le bloc-batterie selon la revendication 7, dans lequel :
lorsque la tension de la cellule de batterie mesurée par le BMS (2200) est supérieure à 0,5 V et que la température de la cellule de batterie est inférieure à 70 degrés Celsius,
l'unité de commande (2100) acquiert une information de libération d'anomalie d'emballement thermique, et
l'unité de commande de vanne (2300) commande de sorte que la première unité de commande de vanne (2400) et la deuxième unité de commande de vanne (2500) arrêtent la première vanne (V1) et la deuxième vanne (V2).

10. Le bloc-batterie selon la revendication 8, dans lequel :
le bloc-batterie (1000) comprend au moins une unité de pulvérisation connectée à l'orifice d'eau (1500) et située de manière adjacente à la partie module (1170), et
l'unité de pulvérisation pulvérise de l'eau qui s'est écoulée dans l'orifice d'eau (1500) en direction de la partie module (1170).

11. Le bloc-batterie selon la revendication 10, comprenant en outre une paroi de séparation (1150) située entre la partie module (1170) et l'unité électrique, dans lequel l'au moins une unité de pulvérisation est située à distance de l'une et de l'autre sur la paroi de séparation (1150).

12. Le bloc-batterie selon la revendication 10, dans lequel :
l'unité de pulvérisation (1155) est située de manière adjacente à un module de batterie (1600) qui est situé le plus près de l'orifice d'eau (1500) parmi la pluralité de modules de batterie (1600).
